# EUROPEAN PATENT APPLICATION

(11) **EP 1 717 898 A1**
(43) Date of publication of application: **02.11.2006**
(21) Application number: 05709980.6
(22) Date of filing: 09.02.2005
(51) Int. Cl.: H01M 14/00, H01L 31/04

(54) **DYE-SENSITIZED SOLAR CELL**

(30) Priority: 13.02.2004 JP 2004036498; 18.06.2004 JP 2004181299; 23.06.2004 JP 2004185164
(71) Applicant: Bridgestone Corporation, Tokyo 104-8340 (JP)
(72) Inventor: SUGIYAMA, Hideo, Techn. Center, Bridgestone Corp., Kodaira-shi, Tokyo 1870031 (JP); OHNO, Shingo, Techn. Center, Bridgestone Corp., Kodaira-shi, Tokyo 1870031 (JP); SUGI, Shinichiro, Techn. Center, Bridgeston Corp., Kodaira-shi, Tokyo 1870031 (JP); TOYOSAWA, Shinichi, Techn. Center Bridgestone Corp, Kodaira-shi, Tokyo 1870031 (JP); YOSHIKAWA, Masato, Techn. Center Bridgestone Corp., Kodaira-shi, Tokyo 1870031 (JP)
(74) Representative: Whalley, Kevin
(86) International application number: PCT/JP2005/001928
(87) International publication number: WO 2005/078853

(57) **Abstract**

A method for making a dye-sensitized solar cell having a semiconductor film that exhibits high power generating efficiency and that can be formed at relatively low temperature is provided. Titanium oxide paste is applied and dried on a transparent conductive film 2 to form a titanium oxide layer. An aqueous peroxotitanic acid solution 11 is dropwise-placed and heated on the titanium oxide layer. During this process, the aqueous peroxotitanic acid solution penetrates sites on which titanium oxide particles 10 are not adsorbed on the transparent conductive film 2, and the aqueous peroxotitanic acid solution 11 reacts to generate titanium oxide 11A. The titanium oxide 11A is generated at gaps s,t between the titanium oxide particles 10 to form tight linkages between titanium oxide particles 10, resulting in high power generating efficiency.

## Description

### Technical Field

The present invention relates to a method for making a dye-sensitized solar cell, the method including an improved step of forming a semiconductor film in the dye-sensitized solar cell.

The present invention relates to a counter electrode opposite to a dye-sensitized semiconductor electrode with an electrolyte therebetween, and a dye-sensitized solar cell including the counter electrode. In particular, the present invention relates to a counter electrode used in dye-sensitized solar cells and a dye-sensitized solar cell that are inexpensive and have improved catalytic activity.

The present invention relates to a dye-sensitized solar cell free from leakage of an electrolyte solution and a method for making the same.

### Background Art

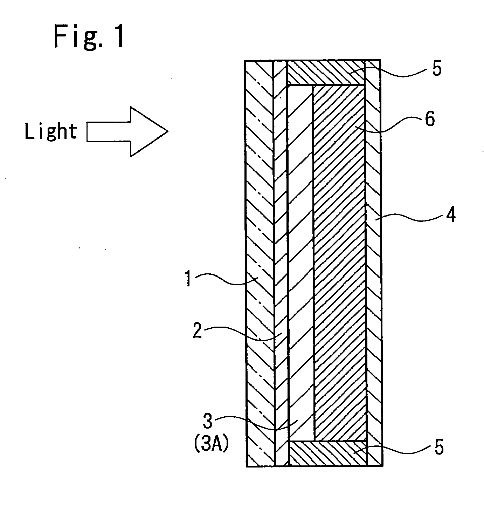

Solar cells having electrodes composed of oxide semiconductors on which sensitizing dyes are adsorbed are known. Fig. 1 is a cross-sectional view of a typical structure of such dye-sensitized solar cells. As shown in Fig. 1, a transparent conductive film 2 composed of fluorine-doped tin oxide (FTO) or indium tin oxide (ITO) is provided on a substrate 1 such as a glass substrate. A metal oxide semiconductor film 3 on which a spectrally photosensitive dye is adsorbed is formed on the transparent conductive film 2 to provide a dye-sensitized semiconductor electrode. A counter electrode 4 is opposed to the metal oxide semiconductor film 3 with a gap therebetween, the gap between the dye-sensitized semiconductor electrode and the counter electrode 4 being hermetically filled with an electrolyte 6 using sealants 5.

The dye-adsorbing semiconductor film 3 is generally composed of a titanium oxide film containing adsorbed dye and the titanium oxide film is formed by a sol-gel process. The dye adsorbed on the titanium oxide film is excited by visible light, and electrons generated are transferred to nanoparticles, resulting in generation of electricity (Japanese Unexamined Patent Application Publication No. 2003-308893).

The counter electrode 4 includes a transparent conductive film composed of ITO or FTO formed on a substrate composed of glass or plastic, and a platinum or carbon film formed on the transparent conductive film. The platinum or carbon film promotes electron transfer between the transparent conductive film and the sensitizing dye, and the thickness thereof is controlled such that the transmittance does not decrease.

Examples of the electrolyte 6 includes redox materials, such as combinations of elemental iodine and metal iodides, e.g., LiI, NaI, KI, and CaI₂; and combinations of elemental bromine and metal bromides, e.g., LiBr, NaBr, KBr, and CaBr₂. A preferred electrolyte 6 is an electrolyte solution prepared by dissolving a redox material containing a combination of a metal iodide and elemental iodine in a solvent, such as a carbonate compound, e.g., propylene carbonate, or a nitrile compound, e.g., acetonitrile.

Semiconductor films of titanium oxide have been formed on heat-resistive substrates composed of, for example, glass, by a sol-gel process. In order to enhance power generation efficiency in dye-sensitized solar cells, titanium oxide particles should link with one another in the semiconductor film so as to enable electron transfer between these titanium oxide particles. Although the conventional sol-gel process forms links between the metal oxide particles at high temperature, only heat resistive materials, such as glass can be used. Thus, films that are not resistive to heat cannot be used.

Conventional counter electrodes have platinum films as catalyst on transparent conductive films for facilitating electron transfer between the transparent conductive films and the sensitizing dye. The platinum film should have a thickness for ensuring catalytic activity. Since platinum is expensive, it is desirable to use a decreased amount of platinum without a decrease in catalytic activity of the counter electrode.

Electrolytes used in conventional dye-sensitized solar cells are generally solutions of redox materials dissolved in solvents, and cause troubles such as leakage from sealed parts. This adversely affects durability and reliability of the dye-sensitized solar cells.

For solving this problem, semi-solidification and film formation of liquid electrolytes have been proposed by carrying them onto a variety of polymers. Semi-solidification, however, requires troublesome injection of electrolyte solutions into the interior after assembling. In the film formation, the film cannot be readily placed on a predetermined position of the counter electrode or substrate, resulting in high difficulty in production.

### Summary of the Invention

A first object of the present invention is to provide a method for making a dye-sensitized solar cell including a semiconductor film that has high power generation efficiency and that can be prepared at relatively low temperature.

A method for making a dye-sensitized solar cell in accordance with a first aspect including a step of forming a semiconductor film on a transparent conductive film provided on a substrate is characterized in that the semiconductor film is formed by applying and heating an aqueous peroxotitanic acid solution containing dispersed titanium oxide particles on the transparent conductive film.

A method for making a dye-sensitized solar cell in accordance with a second aspect including a step of forming a semiconductor film on a transparent conductive film provided on a substrate is characterized in that the semiconductor film is formed by applying and heating a mixture of titanium oxide paste and an aqueous peroxotitanic acid solution or aqueous peroxotitanic acid solution containing dispersed titanium oxide particles on the transparent conductive film.

A method for making a dye-sensitized solar cell in accordance with a third aspect including a step of forming a semiconductor film on a transparent conductive film provided on a substrate is characterized in that the semiconductor film is formed by forming a titanium oxide layer on the transparent conductive film, dropwise-placing and heating an aqueous peroxotitanic acid solution or an aqueous peroxotitanic acid solution containing dispersed titanium oxide particles on the titanium oxide layer.

A method for making a dye-sensitized solar cell in accordance with a fourth aspect including a step of forming a semiconductor film on a transparent conductive film provided on a substrate is characterized in that the semiconductor film is formed by forming a titanium oxide layer on the transparent conductive film, immersing and heating the titanium oxide layer into an aqueous peroxotitanic acid solution or an aqueous peroxotitanic acid solution containing dispersed titanium oxide particles.

According to the method for making a dye-sensitized solar cell in accordance with the first aspect, the semiconductor film can be formed at relatively low temperature that can cause generation of titanium oxide by the reaction of the aqueous peroxotitanic acid solution. Thus, the usable substrate may be any material, such as synthetic resin, having lower thermostability than that of glass. Furthermore, titanium oxide generated between the titanium oxide particles from the aqueous peroxotitanic acid solution forms tight linkages between the titanium oxide particles, resulting in high power generation efficiency.

According to the method for making a dye-sensitized solar cell in accordance with the second aspect, the aqueous peroxotitanic acid solution penetrates gaps between titanium oxide particles contained in the titanium oxide paste during the coating. Titanium oxide generated between the titanium oxide particles, from the aqueous peroxotitanic acid solution during the heating forms tight linkages between the titanium oxide particles, resulting in high power generation efficiency.

According to the method for making a dye-sensitized solar cell in accordance with the third aspect, the dropwise-added aqueous peroxotitanic acid solution penetrates gaps between the titanium oxide particles in the titanium oxide layer during the heating step. Titanium oxide is generated by the reaction of the aqueous peroxotitanic acid solution and forms tight linkages between the titanium oxide particles, resulting in high power generation efficiency.

According to the method for making a dye-sensitized solar cell in accordance with the fourth aspect, the aqueous peroxotitanic acid solution retained on the titanium oxide layer during the immersing step penetrates gaps between the titanium oxide particles in the titanium oxide layer. Titanium oxide is generated by the reaction of the aqueous peroxotitanic acid solution and forms tight linkages between the titanium oxide particles during the heating, resulting in high power generation efficiency.

A second object of the present invention is to provide a counter electrode for a dye-sensitized solar cell having high catalytic activity regardless of use of a reduced amount of platinum and to provide a dye-sensitized solar cell including this counter electrode.

A counter electrode for a dye-sensitized solar cell in accordance with a fifth aspect is to be oppositely disposed to a dye-sensitized semiconductor electrode with an electrolyte therebetween in the dye-sensitized solar cell, wherein at least part of a surface of the counter electrode comprises carbon fibril, the surface being adjacent to the semiconductor electrode.

The counter electrode formed of carbon fibril having a diameter of 30 to several hundred nm and preferably 40 to 500 nm has a high surface area. Carrying platinum on the counter electrode having such a high surface area leads to an enlarged catalytic reaction site, resulting in high catalytic activity regardless of use of a reduced amount of platinum.

A dye-sensitized solar cell in accordance with a sixth aspect comprises a dye-sensitized semiconductor electrode, a counter electrode opposite to the dye-sensitized semiconductor electrode, and an electrolyte disposed between the dye-sensitized semiconductor electrode and the counter electrode, wherein the counter electrode is that in accordance with the fifth aspect.

A third object of the present invention is to provide a dye-sensitized solar cell that has improved durability and safety and that can be readily produced, and to provide a method for making the same.

A dye-sensitized solar cell in accordance with a seventh aspect comprises a dye-sensitized semiconductor electrode, a counter electrode opposite to the dye-sensitized semiconductor electrode, a liquid electrolyte disposed between the dye-sensitized semiconductor electrode and the counter electrode, wherein a porous electrolytically polymerized film is formed on the counter electrode, the electrolytically polymerized film being impregnated with the liquid electrolyte.

A method for making a dye-sensitized solar cell in accordance with an eighth aspect is a method for making the dye-sensitized solar cell in accordance with the seventh aspect and comprises forming an electrolytically polymerized film on a counter electrode; impregnating the electrolytically polymerized film with a liquid electrolyte; and overlaying the dye-sensitized semiconductor electrode.

In the dye-sensitized solar cell in accordance with the seventh aspect comprising the dye-sensitized semiconductor electrode, the counter electrode opposite to the dye-sensitized semiconductor electrode, and the liquid electrolyte disposed between the dye-sensitized semiconductor electrode and the counter electrode, the porous electrolytically polymerized film is impregnated with the liquid electrolyte. Thus, the cell does not cause leakage and has high durability and safety.

Since the electrolytically polymerized film is formed on the counter electrode in advance, high accuracy of position is ensured on the counter electrode. Since fabricating the dye-sensitized solar cell (stacking the dye-sensitized semiconductor electrode) does not require alignment of the electrolytically polymerized film, the dye-sensitized solar cell can be readily fabricated.

In the method for a dye-sensitized solar cell in accordance with the eighth aspect, the electrolytically polymerized film is impregnated with the liquid electrolyte before overlaying the dye-sensitized semiconductor electrode. Thus, the dye-sensitized solar cell can be readily fabricated.

In the present invention, it is preferred that the electrolytically polymerized film be formed inside the peripheral region of the counter electrode and the substrate, and the counter electrode be bonded to each other with a hot-melt adhesive at the peripheral region.

Such a method prevents contamination by the liquid electrolyte at the peripheral region of the counter electrode or the substrate. Thus, the counter electrode and the substrate come into direct contact with and tightly adhere to the hot-melt adhesive.

Preferably, the electrolytically polymerized film should comprise an electrolytic polyaniline film.

### Brief Description of the Drawings

[Fig. 1] Fig. 1 is a cross-sectional view illustrating a structure of a dye-sensitized solar cell.
[Fig. 2] Fig. 2 is a schematic cross-sectional view of a semiconductor film prepared by a method in accordance with an embodiment.
[Fig. 3] Fig. 3 is a graph illustrating characteristics of dye-sensitized solar cells fabricated in EXAMPLE 1 and COMPARATIVE EXAMPLE 1.
[Fig. 4] Fig. 4 is a graph illustrating characteristics of dye-sensitized solar cells fabricated in EXAMPLE 2 and COMPARATIVE EXAMPLE 2.
[Fig. 5] Fig. 5 is an exploded isometric view of a dye-sensitized solar cell in accordance with an embodiment.
[Fig. 6] Fig. 6 is an exploded cross-sectional view of a dye-sensitized solar cell in accordance with an embodiment.

### Description of the Preferred Embodiments of the Invention

The preferred embodiments will now be described with reference to the drawings. Fig. 1 includes a cross-sectional view of a dye-sensitized solar cell, as described above, and a schematic view illustrating a method for forming a semiconductor film 3A according to the method of the first aspect.

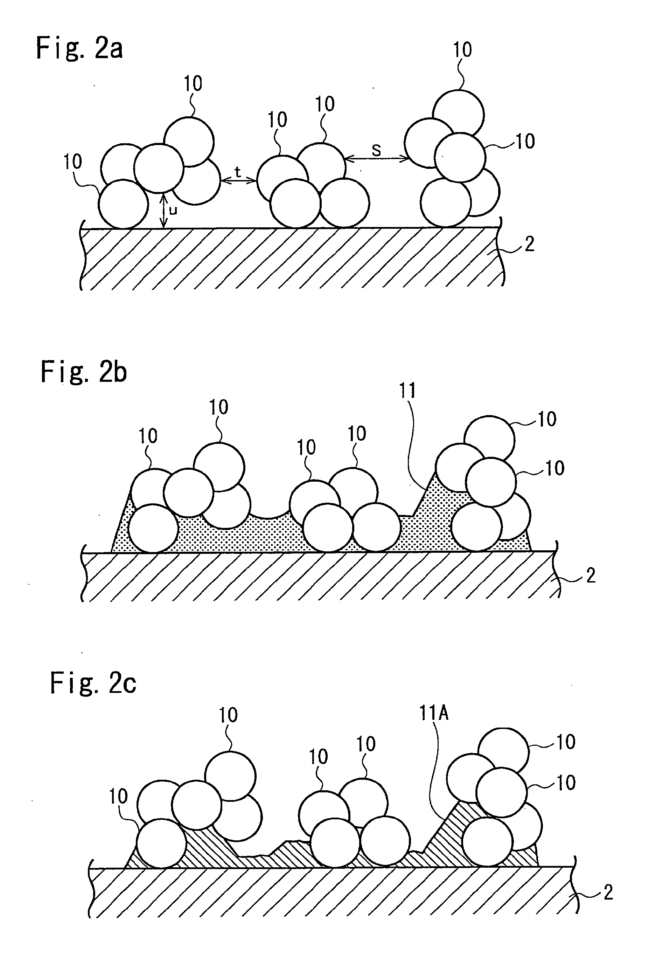

In this method, a transparent conductive film 2 is formed on a substrate 1, and the semiconductor film 3A is formed on the transparent conductive film 2. In this process, titanium oxide paste is applied on the transparent conductive film 2 and is dried to form a titanium oxide layer. With reference to Fig. 2a, titanium oxide particles 10 contained in the titanium oxide layer are adsorbed on the transparent conductive film 2. As shown in Fig. 2a, titanium oxide particles 10 are distributed with gaps s,t and are separated from the transparent conductive film 2 with a gap u. This leads to insufficient electron transfer between the titanium oxide particles 10 and thus low power generation efficiency.

An aqueous peroxotitanic acid solution 11 is dropwise-placed on the titanium oxide layer and is heated, for example, for 1 to 120 min. at 80°C to 250°C and preferably 3 to 60 min. at 100°C to 180°C. As shown in Figs. 2b and 2c, the aqueous peroxotitanic acid solution penetrates sites at which the titanium oxide particles 10 are not adsorbed on the transparent conductive film 2 (Fig. 2b), and the aqueous peroxotitanic acid solution 11 generates titanium oxide 11A with evolution of oxygen and water by a reaction (Fig. 2c). The reaction formula is as follows:

Ti (OOH) (OH)₃ → TiO₂ + 2H₂O + 1/2O₂.

In this manner, titanium oxide 11A is generated at the gaps s,t between the titanium oxide particles 10 and at the gap u between the titanium oxide particles 10 and the transparent conductive film 2. Thus, tight linkages are formed between the titanium oxide particles 10 and between the titanium oxide particles 10 and the transparent conductive film 2, resulting in high power generation efficiency.

Next, spectrally photosensitive dye is adsorbed onto the titanium oxide layer to form a semiconductor film 3A.

Any commercially available titanium oxide paste can be used without limitation.

The diameter of titanium oxide particles in the titanium oxide paste is preferably 5 to 250 nm, more preferably 5 to 100 nm, and most preferably 5 to 50 nm. In this case, particles having a unimodal size distribution or a mixture of particles having a larger diameter and particles having a smaller diameter may be used. A diameter less than 5 nm leads to formation of an excessively dense film, resulting in an increase in resistance due to poor penetration of the electrolyte solution. A diameter exceeding 250 nm causes a smaller surface area of TiO₂ and thus a decrease in power generation efficiency due to a reduced dye adsorption.

The content of the titanium oxide particles in the titanium oxide paste is preferably 40 to 60 weight percent and more preferably 45 to 55 weight percent. A content of titanium oxide particles exceeding 60 weight percent inhibits close contact between the titanium oxide particles in the resulting semiconductor film and thus precludes electron transfers between the titanium oxide particles, resulting in low power generation efficiency. A content less than 40 weight percent causes cracking in the film during a drying step after the application step, resulting in low power generation efficiency.

The content of a nonvolatile component in the aqueous peroxotitanic acid solution is preferably 0.5 to 2 weight percent and more preferably 0.8 to 1.5 weight percent. A content less than 0.5 weight percent lead to poor linkages between the titanium oxide particles by titanium oxide generated from the aqueous peroxotitanic acid solution, resulting in low power generation efficiency. A content exceeding 2 weight percent causes an excessively high TiO₂ particle content after heating, resulting in a decrease in surface area of the TiO₂ electrode.

Titanium oxide particles may be dispersed in the aqueous peroxotitanic acid solution. In this case, the diameter of the titanium oxide particles in the aqueous peroxotitanic acid solution containing dispersed titanium oxide particles is preferably 20 to 1000 nm and more preferably 30 to 600 nm. A diameter less than 20 nm leads to formation of an excessively dense TiO₂ layer, resulting in a decrease in surface area of the TiO₂ electrode and poor device characteristics due to a decrease in dye adsorption. A diameter exceeding 1000 nm causes not only precipitation of TiO₂ particles in the dispersion but also poor penetration of the particles into the gaps between the TiO₂ electrodes, resulting in a reduced improvement in device characteristics.

Preferably, 2 to 40 parts by weight and particularly 5 to 20 parts by weight of titanium oxide particles should be compounded with 100 parts by weight of aqueous peroxotitanic acid solution.

As described above, after the semiconductor film 3A is formed, the counter electrode 4 is disposed so as to be opposite to the semiconductor film 3A with a gap, and the electrolyte 6 is supplied to the gap between the dye-sensitized semiconductor electrode and the counter electrode 4 and sealed with a sealant 5, to complete a dye-sensitized solar cell.

A glass plate, particularly composed of silicate glass, is preferably used as a substrate 1 of the dye-sensitized solar cell. Since the semiconductor film 3A can be subjected to film formation at relatively low temperature, a variety of plastic substrates that can transmit visible light may also be used. In general, the substrate has a thickness of 0.1 to 10 mm and preferably 0.3 to 5 mm. Preferably, the glass plate should be chemically or thermally reinforced.

Examples of the transparent conductive film 2 include conductive metal oxide thin films composed of In₂O₃ and SnO₂, and conductive substrates composed of metals. Examples of preferred conductive metal oxides include In₂O₃:Sn(ITO), SnO₂:Sb, SnO₂:F, ZnO:Al, ZnO:F, and CdSnO₄.

Examples of titanium oxide of the semiconductor film 3A adsorbing a spectrally photosensitive dye include various titanium oxides, titanium hydroxides, and hydrous titanium oxides, e.g., anatase titanium oxide, rutile titanium oxide, amorphous titanium oxide, metatitanic acid, and orthotitanic acid. Anatase titanium oxide is preferred. Preferably, the semiconductor film should have a fine-crystal structure.

Organic dyes (spectrally photosensitive dyes) that are to be adsorbed on the semiconductor film 3A have absorbability in a visible and/or infrared light region. A variety of metal complexes and organic dyes may be used alone or in combination. It is preferred that the dye have a functional group, e.g., a carboxyl group, a hydroxyalkyl group, a hydroxy group, a sulfone group, or carboxyalkyl group, to facilitate adsorption to semiconductor. Alternatively, metal complexes, which exhibit high spectrally photosensitive effects and high durability, are preferably used. Examples of metal complexes include metal phthalocyanines, such as copper phthalocyanine and titanyl phthalocyanine; chlorophyll; hemin; and complexes of ruthenium, osmium, iron, and zinc described in Japanese Unexamined Patent Application Publication Nos. 1-220380 and 5-504023. Examples of organic dyes include metal-free phthalocyanine, cyanine dyes, merocyanine dyes, xanthene dyes, and triphenylmethane dyes. Examples of cyanine dyes include NK1194 and NK3422 made by NIHON KANKOH-SHIKISO INSTITUTE. Examples of merocyanine dyes include NK2426 and NK2501 made by NIHON KANKOH-SHIKISO INSTITUTE. Examples of xanthene dyes include, Uranine, Eosin, Rose Bengal, Rhodamine B, and Dibromofluorescein. Examples of triphenylmethane dyes include Malachite Green and Crystal Violet.

Adsorption of organic dyes (spectrally photosensitive dyes) onto the semiconductor film 3A may be performed by immersing a substrate provided with a semiconductor film into an organic dye solution prepared by dissolving an organic dye into an organic solvent, at room temperature or elevated temperature. Any solvent that can dissolve the spectrally photosensitive dyes may be used. Examples of such solvents include water, alcohols, toluene, and dimethylformamide.

Any conductive material may be used as a counter electrode 4. Use of materials having sufficient catalytic activity to redox reaction of oxidative ions such as electrolytic I₃⁻ ion is preferred. Examples of such materials include platinum electrodes, conductive materials provided with a surface platinum plating or evaporated layer, elemental rhodium, elemental ruthenium, ruthenium oxide, carbon, cobalt, nickel, and chromium.

The dye-sensitized semiconductor electrode may be prepared by coating the substrate 1 with a transparent conductive film 2, forming a semiconductor film 3A in the manner described above, and then adsorbing a dye in the manner described above.

The semiconductor electrode having the semiconductor film 3A adsorbing the dye is arranged so as to face another transparent conductive film as a counter electrode 4, and the space between these electrodes are hermetically filled with an electrolyte 6 using a sealant 5 to prepare a dye-sensitized solar cell.

The present invention is not limited to the above embodiment, which is described as an example. In the above embodiment, an aqueous peroxotitanic acid solution or an aqueous peroxotitanic acid solution containing dispersed titanium oxide particles is dropwise-placed on a titanium oxide layer made of titanium oxide paste. Alternatively, a titanium oxide layer may be immersed into an aqueous peroxotitanic acid solution or an aqueous peroxotitanic acid solution containing dispersed titanium oxide particles.

Alternatively, titanium oxide paste is preliminarily compounded with an aqueous peroxotitanic acid solution or an aqueous peroxotitanic acid solution containing dispersed titanium oxide particles, and the compound may be applied onto a transparent conductive film 2 and may be heated to form a semiconductor film. In this case, the titanium oxide paste and the titanium oxide particles dispersed in the aqueous peroxotitanic acid solution or the aqueous peroxotitanic acid solution containing dispersed titanium oxide particles may have those used in the above embodiment.

Alternatively, an aqueous peroxotitanic acid solution containing dispersed titanium oxide particles may be applied onto a transparent conductive film 2 without use of titanium oxide paste and may be heated to form a semiconductor film. In this case, the titanium oxide paste and the titanium oxide particles dispersed in the aqueous peroxotitanic acid solution or the aqueous peroxotitanic acid solution containing dispersed titanium oxide particles may have those used in the above embodiment.

It is preferred that 1 to 10 weight percent and particularly 1.5 to 5 weight percent of titanium oxide particles as the nonvolatile component be compounded in the aqueous peroxotitanic acid solution containing dispersed titanium oxide particles.

The first to fourth aspects will now be described in detail by EXAMPLES, COMPARATIVE EXAMLES.

### EXAMPLE 1 (Method in accordance with third aspect)

A fluorine-doped tin oxide (FTO) film having a thickness of 9000 angstroms was formed on a silicate glass substrate (thickness: 2mm). A TiO₂ film was formed on the FTO film.

In the formation of the TiO₂ film, titanium oxide paste containing TiO₂ particles having an average diameter of 50 µm was applied onto the FTO film in an amount of 3.5 mg/cm². After drying, a 10 weight percent aqueous peroxotitanic acid solution was dropwise-placed thereon in an amount of 0.2 mg/cm², and was heated for 120 min. at 110°C to form a TiO₂ film.

Structural analysis by thin-film X-ray diffractometry sowed that the resulting TiO₂ film was of an anatase type, and the peak ratio showed (004) plane orientation with respect to the substrate.

Next, lithium iodide (0.3 mol/L) and iodine (0.03 mol/L) were compounded to a 50:50 (weight ratio) mixed solvent of acetonitrile and 3-methyl-2-oxazolidinone to prepare a liquid electrolyte.

The substrate provided with the titanium oxide film was immersed in a cis-di(thiocyanato)-N,N'-bis(2,2'-bipyridyl-4,4'-dicarboxylate)ruthenium(II) dihydrate in ethanol solution (3×10⁻⁴ mol/L) as a spectrally photosensitive dye for 18 hours at room temperature to prepare a dye-sensitized semiconductor electrode. The amount of the spectrally photosensitive dye adsorbed was 10 µg for 1 cm² of the specific surface area of the titanium oxide film.

On the dye-sensitized semiconductor electrode, a tape for preventing liquid flow is provided to form a stop, and the liquid electrolyte was applied. A transparent conductive glass plate carrying platinum as a counter electrode was stacked on the electrolyte film surface, and the peripheral region was sealed with a resin. A lead was attached to prepare a dye-sensitized solar cell.

The resulting dye-sensitized solar cell (area: 1 cm²) was irradiated with 100-mW light using a solar simulator. The Isc current and E_{ff} conversion efficiency are shown in Table 1.

### EXAMPLE 2 (Method in accordance with fourth aspect)

A TiO₂ film was formed and a dye-sensitized solar cell was prepared as in EXAMPLE 1, except that the sample was immersed in the aqueous peroxotitanic acid solution instead of dropwise-placing the aqueous peroxotitanic acid solution.

The resulting dye-sensitized solar cell (area: 1 cm²) was irradiated with 100-mW light using a solar simulator. The Isc current and E_{ff} conversion efficiency are shown in Table 1.

### EXAMPLE 3 (Method in accordance with first aspect)

A TiO₂ film was formed and a dye-sensitized solar cell was prepared as in EXAMPLE 1, except that the aqueous peroxotitanic acid solution was dropwise placed in an amount of 3.0 mg/cm² instead of coating of titanium oxide paste containing TiO₂ particles and the sample was heated for 30 minutes at 450°C.

The resulting dye-sensitized solar cell (area: 1 cm²) was irradiated with 100-mW light using a solar simulator. The Isc current and E_{ff} conversion efficiency are shown in Table 1.

### EXAMPLE 4 (Method in accordance with second aspect)

In EXAMPLE 1, TiO₂ particles paste and an aqueous peroxotitanic acid solution were mixed, and the mixture was applied to form a TiO₂ film. The amount of the TiO₂ particles applied was 3.5 mg/cm², and the amount of the peroxotitanic acid applied was 0.2 mg/cm² on the basis of TiO₂. A dye-sensitized solar cell was prepared as in EXAMPLE 1 except that the TiO₂ film was heated for one hour at 150°C.

The resulting dye-sensitized solar cell (area: 1 cm²) was irradiated with 100-mW light using a solar simulator. The Isc current and E_{ff} conversion efficiency are shown in Table 1.

[Table 1]

| | EXAMPLE 1 | EXAMPLE 2 | EXAMPLE 3 | EXAMPLE 4 |
|---|---|---|---|---|
| Isc current (mA/cm²) | 4.0 | 4.7 | 8.8 | 5.1 |
| Closed circuit voltage (V) | 0.67 | 0.75 | 0.73 | 0.61 |
| E_{ff} Conversion Efficiency (%) | 1.4 | 1.8 | 3.5 | 1.5 |

As shown in Table 1, each solar cell exhibits remarkably superior cell characteristics.

Embodiments of the counter electrode for the dye-sensitized solar cell and the dye-sensitized solar cell in accordance with the fifth and sixth aspect will now be described in detail.

First, a method for making carbon fibril used in the fifth aspect will be described.

A preferred method for making the carbon fibril includes oxidation polymerization of an aromatic compound to prepare fibril polymer and then firing the resulting fibril polymer in a non-oxidation atmosphere. This method does not require a spinning step and an immobilizing step. Thus, the carbon fibril can be produced at reduced costs with high productivity. The resulting carbon fibril has high residual carbon rate and high conductivity. In particular, carbon fibril having a diameter of 30 to several hundred nm can be efficiently produced. Furthermore, electrical characteristics, such as conductivity, of the carbon fibril can be readily controlled.

Examples of aromatic compounds as starting material include benzene-ring-containing phenyl compounds and heterocyclic aromatic compounds. Examples of preferred phenyl compounds include aniline and derivatives thereof. Examples of preferred heterocyclic aromatic compounds include pyrrole, thiophene, and derivatives thereof. These aromatic compounds may be used alone or in combination.

Examples of oxidative polymerization for preparing the fibril polymers from the aromatic compounds include electrolytic oxidation polymerization and chemical oxidation polymerization. Electrolytic oxidation polymerization is preferred.

When fibril polymer is prepared by electrolytic oxidation polymerization, a pair of electrode plates (a working electrode and a counter electrode) are immersed into a solution containing an aromatic compound, and a voltage equal to or higher than the oxidation potential of the aromatic compound or a current generating a voltage sufficient to polymerization of the aromatic compound is applied. Fibril polymer is thereby produced on the working electrode.

In the oxidation polymerization of the aromatic compound, addition of acid to the raw aromatic compound is preferred. The use of acid causes occlusion of negative ions as dopant from the acid in the fibril polymer and thus produces fibril polymer having high conductivity. As a result, the carbon fiber as the final product also has further improved conductivity.

When aniline is used as starting material, polyaniline prepared by oxidation polymerization of aniline in the presence of acid contains the following four types (A) to (D):

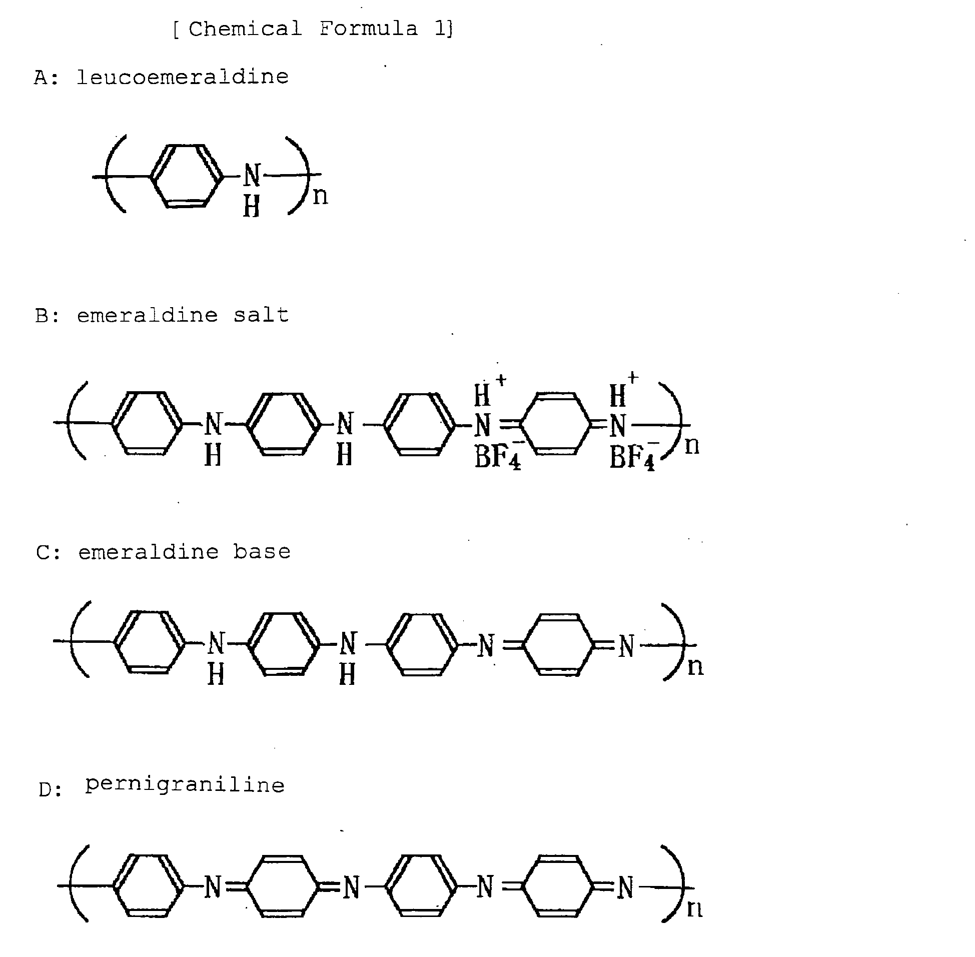

Examples of the acids include HBF₄, H₂SO₄, HCl, and HClO₄. The amount of acid to be used is 30 to 90 mol percent and preferably 50 to 70 mol percent of the aromatic compound.

In synthesis of fibril polymer by electrolytic oxidation polymerization, solid or porous plates of conductive materials such as stainless steel, platinum, and carbon may be used as the working electrode and counter electrode. In an exemplary process of precipitation of fibril polymer on the working electrode, this electrode is immersed in an electrolyte solution containing acid such as H₂SO₄ or HBF₄ and an aromatic compound, and a current of 0.1 to 1000 mA/cm², preferably 0.2 to 100 mA/cm², is applied between these two electrodes. The content of the aromatic compound in the electrolyte solution is preferably 0.05 to 3 mol/L and more preferably 0.25 to 1.5 mol/L. The acid content is preferably 0.1 to 3 mol/L and more preferably 0.5 to 2.5 mol/L. In addition to these components, a soluble salt may be added to the electrolyte solution in order to adjust the pH. The pH after adjustment is preferably 0.0 to 5.0.

The fibril polymer formed on the working electrode is washed with any solvent, e.g., water or an organic solvent, is dried, and is used as a raw material in a subsequent firing step. The fibril polymer may be dried by air drying, vacuum drying, or other drying using a fluidized bed dryer, a flush dryer, or a spray dryer.

Preferably, the fibril polymer should have a diameter of 30 to several hundred nm and more preferably 40 to 500 nm.

By adjusting the doping level of polyaniline in a semiquinone radical state (Type C), the conductivity of and the residual carbon content in the resulting carbon fibril can be controlled. The doping level decreases during reduction of the fibril polymer. Examples of reduction processes include immersing in an aqueous ammonia solution or hydrazine solution and electrochemical application of a reduction current. Although adjusting the acid content during the polymerization can control the doping level to some extent, it cannot readily produce a variety of samples having largely different doping levels.

The fibril polymer is carbonized by firing in a non-oxidation atmosphere such as an inert gas atmosphere in order to prepare carbon fibril. Carbon fibril having high conductivity can be prepared at a temperature of 500°C to 3000°C, preferably 600°C to 2800°C, for 0.5 to 6 hours. Examples of gas used for the inert gas atmosphere include nitrogen, argon, helium, and hydrogen alone or in combination.

The resulting carbon fibril has a diameter of 30 to several hundred nm, preferably 40 to 500 nm and a surface resistance of 10⁶ to 10⁻² Q, preferably 10⁴ to 10⁻² Ω. The residual carbon content in the carbon fibril is 95 to 30 percent, preferably 90 to 40%.

It is preferred that fibril polymer be precipitated on carbon fiber constituting carbon paper, and be fired with the carbon paper. A conductive substrate on which carbon fibril is formed is thereby prepared. This substrate is significantly suitable for a counter electrode of a dye-sensitized solar cell.

Graphite plates, metal plates, glass plates with transparent conductive films may be used instead of the carbon paper.

Preferably, the carbon fibril should be formed on the surface of the substrate in an amount of 0.1 to 1.0 mg/cm², and particularly 0.3 to 0.7 mg/cm².

Although conductive porous substrate, such as carbon paper, on which carbon fibril is formed may be used without any modification, carrying catalyst such as platinum on the carbon fibril leads to production of a counter electrode having higher activity.

Examples of catalyst include elemental platinum and platinum alloys. The catalyst can be readily carried on the carbon fibril by sputtering.

The catalyst carried on the surface of the substrate contributes to high catalytic activity of the substrate even though the catalyst content is as low as 0.01 to 0.5 mg/m² preferably 0.05 to 0.2 mg/m².

The structure of the dye-sensitized solar cell other than the counter electrode is substantially the same as that of the conventional dye-sensitized solar cell shown in Fig. 1.

The fifth and six aspects will now be described in detail by EXAMPLES and COMPARATIVE EXAMPLES.

### EXAMPLE 5

A working electrode composed of carbon paper made by Toray Industries, Inc. and a platinum plate as a counter electrode were placed in an acidic aqueous solution (pH = 0.1) containing aniline monomer (0.5 mol/L) and HBF₄ (1.0 mol/L). Electrolytic polymerization was performed at a constant current of 10 mA/cm² at room temperature to electrodeposite polyaniline on the carbon paper of the working electrode. After the resulting polyaniline was washed with deionized water, it was vacuum-dried for 24 hours. SEM observation showed the formation of fibril polyaniline having a diameter of 50 to 100 nm on the carbon fiber constituting the carbon paper.

The polyaniline was heated up to 900°C at a heating rate of 3°C/min in an argon atmosphere, and was fired at 900°C for one hour. The resulting fired product was observed by SEM. It was confirmed that carbon fibril having a diameter of 40 to 100 nm in an amount of 0.5 mg/cm² was formed on the carbon paper.

The observed residual carbon content in the carbon fibril was 70 percent. The carbon fibril was pelletized under pressure, and the surface resistance of the pellet was observed with a surface resistance meter (Loresta IP or Heresta IP made by Mitsubishi Petroleum Chemistry). The resistance was 1.0 Ω.

Platinum was evaporated on the carbon paper provided with carbon fibril to form a counter electrode. Sputtering was carried out at an argon atmosphere of 0.5 Pa, and 0.05 mg/cm² of platinum was carried. A glass plate as a backup material was attached to the other surface, remote from the carbon fibril, of the carbon paper to prepare a counter electrode 4 shown in Fig. 1.

A fluorine-doped tin oxide was formed on a glass substrate (thickness: 2 mm) as the substrate 1 shown in Fig. 1, and 10 µm thick titanium oxide layer (corresponding to 1.2 mg/cm² of titanium oxide) was deposited thereon by doctor blading.

The substrate provided with the titanium oxide layer was immersed in a cis-di(thiocyanato)-N,N'-bis(2,2'-bipyridyl-4,4'-dicarboxylate)ruthenium(II) dihydrate in ethanol solution (3×10⁻⁴ mol/L) as a spectrally photosensitive dye for 18 hours at room temperature to prepare a dye-sensitized semiconductor electrode. The amount of the adsorbed spectrally photosensitive dye was 10 µg for 1 cm² of specific surface area of the titanium oxide layer.

Aside from this, lithium iodide (0.3 mol/L) and iodine (0.03 mol/L) were compounded to a mixed solvent of acetonitrile and 3-methyl-2-oxazolidinone (50:50) to prepare a liquid electrolyte.

On the peripheral region of the dye-sensitized semiconductor electrode, a tape for preventing liquid flow was provided, and the liquid electrolyte was applied. The counter electrode was stacked on the electrolyte, and the peripheral region was sealed with a resin. A lead was attached to prepare a dye-sensitized solar cell.

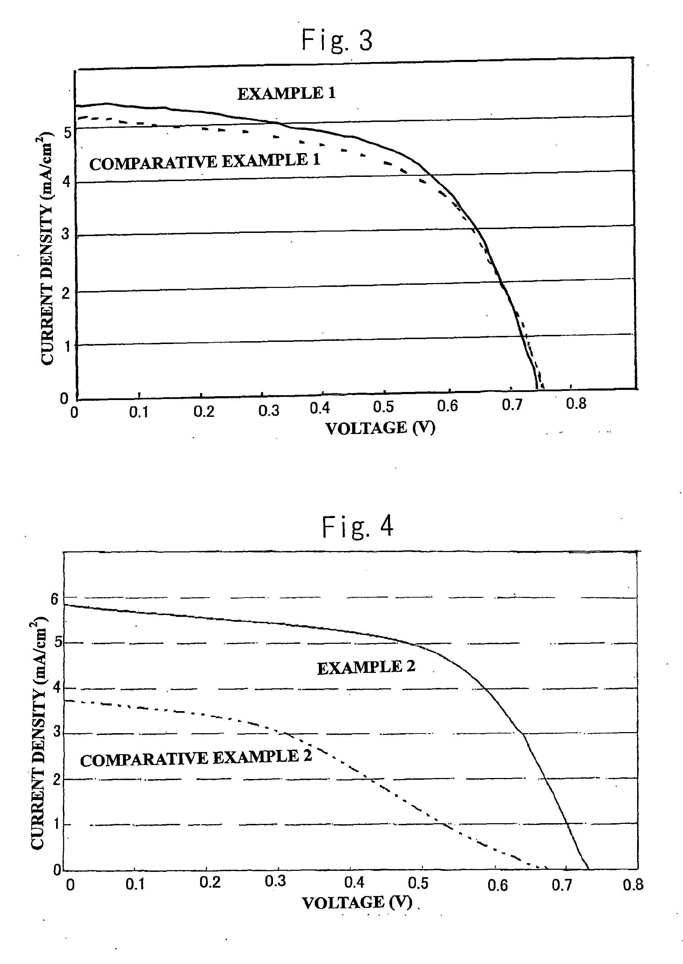

The resulting dye-sensitized solar cell was irradiated with 100-mW light using a solar simulator to measure generating characteristics of the cell. As shown in Fig. 3, the conversion rate was 1.1 times higher than that of COMPARATIVE EXAMPLE 1 (described below), regardless of a half amount of platinum used.

### EXAMPLE 6

A dye-sensitized solar cell was fabricated and the characteristics of the cell were measured as in EXAMLE 5 except that platinum sputtering was not employed. As shown in Fig. 4, the conversion rate was 2.6 times higher than that of COMPARATIVE EXAMPLE 2 (described below).

### COMPARATIVE EXAMPLE 1

A dye-sensitized solar cell was fabricated and the characteristics of the cell were measured as in EXAMLE 1 except that the counter electrode was carbon paper not containing carbon fibril but carrying 0.1 mg/cm² of platinum. The results are shown in Fig. 3.

### COMPARATIVE EXAMPLE 2

A dye-sensitized solar cell was fabricated and the characteristics of the cell were measured as in COMPARATIVE EXAMPLE 1 except that platinum sputtering was not employed. The results are shown in Fig. 4.

Figs. 3 and 4 show that the use of the counter electrode composed of carbon fibril according to the present invention provides a high-performance cell regardless of a reduced amount of platinum.

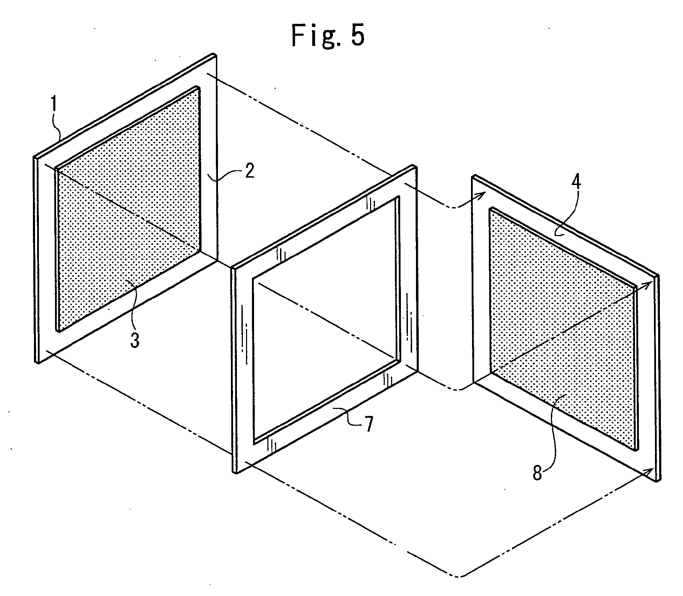

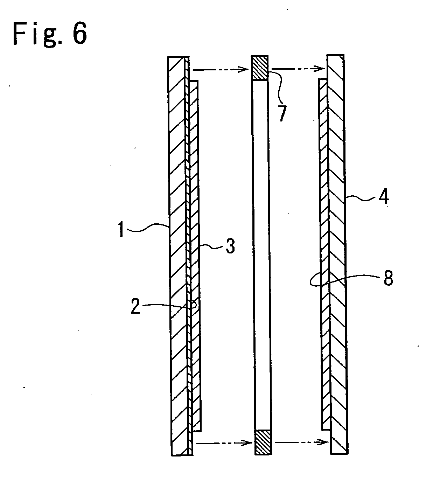

With reference to the drawings, embodiments in accordance with the seventh and eighth aspects will now be described. Fig. 5 is an exploded isometric view of a dye-sensitized solar cell in accordance with an embodiment, and Fig. 6 is an exploded cross-sectional view thereof. In Figs. 5 and 6, the same reference numbers are assigned to the components shown in Fig. 1.

Also, in this embodiment, a transparent conductive film 2 is provided on a substrate 1 such as glass substrate, and a semiconductor film 3 containing adsorbed spectrally photosensitive dye is formed on the transparent conductive film 2. A dye-sensitized semiconductor electrode is formed of the substrate 1, the transparent conductive film 2, and the semiconductor film 3. A counter electrode 4 is opposed to the dye-sensitized semiconductor electrode with a gap.

In this embodiment, a porous electrolytically polymerized film 8 is formed on a surface of the counter electrode 4 and is impregnated with a liquid electrolyte 6. The electrolytically polymerized film 8 is formed inside the peripheral region of the counter electrode 4.

In this embodiment, the transparent conductive film 2 is formed over the entire surface of the substrate 1. The semiconductor film 3 is formed on the transparent conductive film 2 inside the peripheral region of the substrate 1.

The peripheral region, free from the semiconductor film 3, of the substrate and the peripheral region, free from the electrolytically polymerized film 8, of the counter electrode 4 are bonded with a hot-melt adhesive 7 to prepare a dye-sensitized solar cell. The frame of the hot-melt adhesive 7 completely surrounds the electrolytically polymerized film 8. The transparent conductive film 2 is in contact with the electrolytically polymerized film 8 inside the hot-melt adhesive 7.

The substrate 1 provided with the transparent conductive film 2 and the semiconductor film 3 and the counter electrode 4 provided with the electrolytically polymerized film 8 are bonded as follows: The substrate 1, the hot-melt adhesive 7, and the counter electrode 4 are stacked and are placed in a nonpermeable heat-resistive light bag. The bag is vacuumed so that the substrate 1, the hot-melt adhesive 7, and the counter electrode 4 are in close contact with each other. The stack is pressed if necessary. The stack is heated to soften the hot-melt adhesive 7 and then is cooled to bond the substrate 1 and the counter electrode 4 by the hot-melt adhesive 7. A dye-sensitized solar cell is thereby fabricated. A lead is connected to the transparent conductive film 2.

The transparent conductive film 2 may be formed on the entire surface of the substrate 1 or may be formed such that part of the transparent conductive film 2 extends to an edge of the substrate, a lead being connected at the edge.

Materials used in each component will now be described.

Materials suitable for the substrate 1 include glass plates of silicate glass and may be plastic substrates having high transmittance in a visible light region. The thickness of the substrate is typically 0.1 to 10 mm and preferably 0.3 to 5 mm. Preferably, the glass plates should be chemically or thermally reinforced.

Preferred materials for the transparent conductive film 2 include conductive metal oxide thin films of In₂O₃ and SnO₂. Examples of preferred conductive metal oxides include In₂O₃:Sn(ITO), SnO₂:Sb, SnO₂:F, ZnO:Al, ZnO:F, and CdSnO₄. Preferably, the transparent conductive film 2 should have a thickness of 200 to 10000 nm and particularly 500 to 3000 nm.

Examples of the semiconductor film 3 on which spectrally photosensitive dye is adsorbed include known semiconductors such as titanium oxide, zinc oxide, tungsten oxide, antimony oxide, niobium oxide, indium oxide, barium titanate, strontium titanate, and cadmium sulfide alone or in combination. In view of stability and safety, titanium oxide is preferred. Examples of titanium oxide include titanium oxides, titanium hydroxides, and hydrous titanium oxides, e.g., anatase titanium oxide, rutile titanium oxide, amorphous titanium oxide, metatitanic acid, and orthotitanic acid. In the present invention, anatase titanium oxide is preferred. Preferably, the metal oxide semiconductor film should have a fine-crystal structure. Preferably, the semiconductor film 3 has a thickness of 2 to 30 µm and particularly 8 to 15 µm.

Organic dyes (spectrally photosensitive dyes) to be adsorbed on the metal oxide semiconductor film 3 have absorbability in a visible and/or infrared light region. A variety of metal complexes and organic dyes may be used alone or in combination. It is preferred that the dye have a functional group, such as a carboxyl group, a hydroxyalkyl group, a hydroxy group, a sulfone group, and carboxyalkyl group, to facilitate adsorption to semiconductor. Alternatively, metal complexes, which exhibit high spectrally photosensitive effects and high durability, are preferably used. Examples of metal complexes include metal phthalocyanines, such as copper phthalocyanine and titanyl phthalocyanine; chlorophyll; hemin; and ruthenium, osmium, iron, and zinc complexes described in Japanese Unexamined Patent Application Publication Nos. 1-220380 and 5-504023. Examples of organic dyes include metal-free phthalocyanine, cyanine dyes, merocyanine dyes, xanthene dyes, and triphenylmethane dyes. Examples of cyanine dyes include NK1194 and NK3422 made by NIHON KANKOH-SHIKISO INSTITUTE. Examples of merocyanine dyes include NK2426 and NK2501 made by NIHON KANKOH-SHIKISO INSTITUTE. Examples of xanthene dyes include, Uranine, Eosin, Rose Bengal, Rhodamine B, and Dibromofluorescein. Examples of triphenylmethane dyes include Malachite Green and Crystal Violet.

Adsorption of organic dyes (spectrally photosensitive dyes) onto the semiconductor film 3 may be performed by immersing a substrate with a semiconductor film into an organic dye solution prepared by dissolving an organic dye into an organic solvent, at room temperature or elevated temperature. Any solvent that can dissolve the spectrally photosensitive dyes may be used. Examples of such solvents include water, alcohols, toluene, and dimethylformamide.

Any conductive material may be used as a counter electrode 4. Use of materials having sufficient catalytic activity to redox reaction of oxidative ions such as electrolytic I₃⁻ ion is preferred. Examples of such materials include platinum electrodes, conductive materials provided with a surface platinum plating or evaporated layer, elemental rhodium, elemental ruthenium, ruthenium oxide, carbon, cobalt, nickel, and chromium.

The electrolytically polymerized film 8 formed on the counter electrode 4 is preferably composed of an electrolytic polyaniline film.

The electrolytic polyaniline film can be formed on the counter electrode 4 by electrolytic polymerization of monomers composed of aniline and its derivatives in an acidic aqueous solution using the counter electrode 4 as a working electrode. Examples of preferred aqueous solution include fluoroboric acid, perchloric acid, hydrochloric acid, and sulfuric acid, each containing 0.1 to 2 mol/L aniline or its monomer derivatives. Before the electrolysis, peripheral region of the counter electrode 4 is masked with a resin film or the like, and the masking was removed after the electrolytic polymerization. An electrolytically polymerized film of polyaniline or its derivative is formed only inside the peripheral region. Examples of aniline derivatives include poly-N-methylaniline and poly-N-diethylaniline.

The film prepared by the electrolytic polymerization is washed with water and is dried.

Preferably, the electrolytically polymerized film should have a thickness of 2 to 50 µm and a porosity of 20 to 70%.

Examples of liquid electrolytes with which the electrolytically polymerized film 8 is impregnate include redox materials, for example, combinations of metal iodides, such as LiI, NaI, KI, and CaI₂, and elemental iodine, and combinations of metal bromides, such as LiBr, NaBr, KBr, and CaBr₂, and elemental bromine, preferably combinations of metal iodides and elemental bromine. These redox materials are dissolved in solvents, such as carbonate compounds, e.g., propylene carbonate, or nitrile compounds, e.g., acetonitrile. The content of the redox material in the liquid electrolyte is in the range of 0.01 to 1 mol/L, and particularly 0.05 to 0.5 mol/L.

Preferably, the hot-melt adhesive 7 should have a melting point of 100°C to 200°C.

In this embodiment, the substrate 1 and the counter electrode 4 are directly bonded with the hot-melt adhesive 7 at the peripheral region. Alternatively, one or more spacers may be disposed between the substrate 1 and the counter electrode 4 and be bonded thereto with a hot-melt adhesive.

Seventh and eighth embodiments will now be described in detail by EXAMPLES.

### EXAMPLE 7

### [Production of counter electrode provided with electrolytically polymerized film]

A transparent conductive glass plate that was coated with a fluorine-doped tin oxide and carrying platinum was used as a counter electrode. The counter electrode (2.5 cm by 2.5 cm) was used as an electrolytic electrode. The electrode, other than a central platinum portion (1 cm by 1 cm), was masked with an imide resin tape. The electrode was immersed in an acidic aqueous solution containing aniline (1 mol/L) and fluoroboric acid (2 mol/L), and was energized at a current density of 15 mA/cm² for 30 minutes, to form an electrolytic polyaniline film having a thickness of 50 µm and a porosity of 50% on the counter electrode. The electrolytic polyaniline film was impregnated with 100 mg of redox solution having the following composition as a liquid electrolyte:
<Redox solution>
Acetonitrile (solvent): 1L
Lithium iodide: 0.2 mol (weight basis)
1,2-Dimethyl-3-propylimidazolium iodide: 0.2 mol Iodine: 0.1 mol
t-Butylpyridine: 0.4 mol

### [Production of substrate provided with semiconductor film and transparent conductive film]

An ITO film having a thickness of 3000 angstroms was formed on a glass substrate (size: 2.5 cm by 3 cm, thickness: 2 mm), and a titanium oxide film having a thickness of 10 µm was formed on the ITO film. No titanium oxide film was formed on a region having a width of 7 to 10 mm from the peripheral region of the substrate.
The substrate provided with the titanium oxide layer was immersed in a cis-di(thiocyanato)-N,N'-bis(2,2'-bipyridyl-4,4'-dicarboxylate)ruthenium(II) dihydrate in ethanol solution (3×10⁻⁴ mol/L) as a spectrally photosensitive dye for 18 hours at room temperature to prepare a dye-sensitized semiconductor electrode. The amount of the adsorbed spectrally photosensitive dye was 10 µg for 1 cm² of specific surface area of the titanium oxide layer.

### [Assembling]

The substrate and the counter electrode were laminated with a hot-melt adhesive having a thickness of 50 µm and a melting point of 100°C, and the laminate was placed in a soft-resin bag. After the bag was vacuumed, it was heated to 120°C and then is cooled. A lead line was connected in order to complete a dye-sensitized solar cell in accordance with the present invention.
The resulting dye-sensitized solar cell was irradiated with 100-mW light using a solar simulator. The Isc short-circuit current (mA), the Voc open voltage (V), F.F fill factor, and E_{ff} conversion efficiency (%) are shown in Table 2.

### EXAMPLE 8

A dye-sensitized solar cell was prepared as in EXAMPLE 7 except that the thickness of the electrolytically polymerized film was 30 µm and the electrolytically polymerized film was impregnated with 60 mg of redox solution. The results are shown in Table 2.

[Table 2]

| | EXAMPLE 7 | EXAMPLE 8 |
|---|---|---|
| Thickness of electrolytically polymerized film (µm) | 50 | 30 |
| Isc short-circuit current (mA) | 3.2 | 4.6 |
| Voc open voltage (V) | 0.62 | 0.64 |
| F.F fill factor | 0.48 | 0.48 |
| Eff conversion efficiency (%) | 0.95 | 1.5 |

As shown in Table 2, according to the seventh and eighth embodiments, dye-sensitized solar cells at practical level can be produced.

## Claims

1. A method for making a dye-sensitized solar cell including a step of forming a semiconductor film on a transparent conductive film provided on a substrate;
the method is **characterized in that** the semiconductor film is formed by applying and heating an aqueous peroxotitanic acid solution containing dispersed titanium oxide particles on the transparent conductive film.

2. A method for making a dye-sensitized solar cell including a step of forming a semiconductor film on a transparent conductive film provided on a substrate;
the method is **characterized in that** the semiconductor film is formed by applying and heating a mixture of titanium oxide paste and an aqueous peroxotitanic acid solution or aqueous peroxotitanic acid solution containing dispersed titanium oxide particles on the transparent conductive film.

3. A method for making a dye-sensitized solar cell including a step of forming a semiconductor film on a transparent conductive film provided on a substrate;
the method is **characterized in that** the semiconductor film is formed by forming a titanium oxide layer on the transparent conductive film, dropwise-placing and heating an aqueous peroxotitanic acid solution or an aqueous peroxotitanic acid solution containing dispersed titanium oxide particles on the titanium oxide layer.

4. A method for making a dye-sensitized solar cell including a step of forming a semiconductor film on a transparent conductive film provided on a substrate;
the method is **characterized in that** the semiconductor film is formed by forming a titanium oxide layer on the transparent conductive film, immersing and heating the titanium oxide layer into an aqueous peroxotitanic acid solution or an aqueous peroxotitanic acid solution containing dispersed titanium oxide particles.

5. The method for making a dye-sensitized solar cell in accordance with claim 3, wherein titanium oxide paste is applied on the transparent conductive film and is dried.

6. The method for making a dye-sensitized solar cell in accordance with claim 4, wherein titanium oxide paste is applied on the transparent conductive film and is dried.

7. The method for making a dye-sensitized solar cell in accordance with claim 3, wherein the titanium oxide layer is formed by a wet process, such as chemical solution deposition, or a dry process, such as reactive sputtering.

8. The method for making a dye-sensitized solar cell in accordance with claim 4, wherein the titanium oxide layer is formed by a wet process, such as chemical solution deposition, or a dry process, such as reactive sputtering.

9. The method for making a dye-sensitized solar cell in accordance with claim 1, wherein the transparent conductive film is indium oxide doped with tin oxide or tin oxide doped with fluorine.

10. The method for making a dye-sensitized solar cell in accordance with claim 2, wherein the transparent conductive film is indium oxide doped with tin oxide or tin oxide doped with fluorine.

11. The method for making a dye-sensitized solar cell in accordance with claim 3, wherein the transparent conductive film is indium oxide doped with tin oxide or tin oxide doped with fluorine.

12. The method for making a dye-sensitized solar cell in accordance with claim 4, wherein the transparent conductive film is indium oxide doped with tin oxide or tin oxide doped with fluorine.

13. A counter electrode for a dye-sensitized solar cell, the counter electrode being to be oppositely disposed to a dye-sensitized semiconductor electrode with an electrolyte therebetween in the dye-sensitized solar cell, wherein at least part of a surface of the counter electrode comprises carbon fibril, the surface being adjacent to the semiconductor electrode.

14. The counter electrode for a dye-sensitized solar cell in accordance with claim 13, wherein a catalyst is carried on the carbon fibril.

15. The counter electrode for a dye-sensitized solar cell in accordance with claim 14, wherein the catalyst is elemental platinum or a platinum alloy.

16. The counter electrode for a dye-sensitized solar cell in accordance with claim 14, wherein the catalyst is carried in an amount of 0.01 to 0.08 mg/cm² per area of the counter electrode.

17. The counter electrode for a dye-sensitized solar cell in accordance with claim 13, wherein the carbon fibril is formed by firing a fibril polymer prepared by oxidation polymerization of an aromatic compound in a nonoxidation atmosphere.

18. The counter electrode for a dye-sensitized solar cell in accordance with claim 13, wherein the carbon fibril is formed on carbon paper.

19. A dye-sensitized solar cell comprising a dye-sensitized semiconductor electrode, a counter electrode opposite to the dye-sensitized semiconductor electrode, and an electrolyte disposed therebetween, wherein the counter electrode is the counter electrode descried in claim 13.

20. A dye-sensitized solar cell comprising a dye-sensitized semiconductor electrode, a counter electrode opposite to the dye-sensitized semiconductor electrode, a liquid electrolyte disposed between the dye-sensitized semiconductor electrode and the counter electrode,
wherein a porous electrolytically polymerized film is formed on the counter electrode; and
the electrolytically polymerized film is impregnated with the liquid electrolyte.

21. The dye-sensitized solar cell in accordance with claim 20, wherein electrolytically polymerized film is fibrous.

22. The dye-sensitized solar cell in accordance with claim 21, wherein the electrolytically polymerized film is an electrolytically polymerized aniline film.

23. A method for making a dye-sensitized solar cell in accordance with claim 20, comprising:
forming an electrolytically polymerized film on a counter electrode; impregnating the electrolytically polymerized film with a liquid electrolyte; and overlaying the dye-sensitized semiconductor electrode.

24. The method for making a dye-sensitized solar cell in accordance with claim 23, wherein an electrolytically polymerized aniline film.

25. The method for making a dye-sensitized solar cell in accordance with claim 23, wherein the counter electrode provided with the electrolytically polymerized film impregnated with the liquid electrolyte and the dye-sensitized semiconductor electrode are bonded with a hot-melt adhesive.

26. The method for making a dye-sensitized solar cell in accordance with claim 25, wherein the electrolytically polymerized film is formed inside the periphery portion of the counter electrode, and the hot-melt adhesive is applied to the peripheral region of the counter electrode.
